Europäisches Patentamt

European Patent Office

Office européen des brevets

(11) Numéro de publication : **0 356 278 B1**

(12) **FASCICULE DE BREVET EUROPEEN**

(19)

(45) Date de publication du fascicule du brevet :
**15.07.92 Bulletin 92/29**

(21) Numéro de dépôt : **89402132.8**

(22) Date de dépôt : **26.07.89**

(51) Int. Cl.⁵ : **F16B 7/04**

(54) **Piéce de jonction entre deux profiles métalliques.**

(30) Priorité : **27.07.88 FR 8810148**

(43) Date de publication de la demande :
**28.02.90 Bulletin 90/09**

(45) Mention de la délivrance du brevet :
**15.07.92 Bulletin 92/29**

(84) Etats contractants désignés :
**AT BE CH DE ES GB GR IT LI LU NL SE**

(56) Documents cités :
**EP-A- 0 178 369
DE-A- 1 909 056
FR-A- 1 556 758
FR-A- 2 543 206
FR-A- 2 563 293
FR-A- 2 593 862**

(73) Titulaire : **TECHNAL S.A.
270, rue Léon Joulin
F-31037 Toulouse Cedex (FR)**

(72) Inventeur : **Verdier, Gérard
21 rue du Catel Viel
F-31780 Castelginest (FR)**
Inventeur : **L'autre inventeur a renoncé à sa désignation**

(74) Mandataire : **Grosset-Fournier, Chantal Catherine et al
SC Ernest Gutmann/Yves Plasseraud 67 boulevard Haussmann
F-75008 Paris (FR)**

EP 0 356 278 B1

## Description

La présente invention est relative à une pièce de jonction permettant de réunir deux profilés métalliques formant entre eux un angle donné, en assurant leur serrage mutuel l'un contre l'autre selon deux faces d'appui appropriées.

L'invention vise en particulier à réaliser l'assemblage de deux profilés disposés l'un par rapport a l'autre de manière à former une équerre à angle droit ou quelconque, par exemple lorsque les profilés présentent une coupe dite à onglet, au moyen d'une pièce de liaison qui peut en outre être, selon le cas, rigide ou articulée.

On connaît déjà de nombreux systèmes pour réaliser la liaison de deux profilés tubulaires, ou encore de tels profilés avec embouts à un ou plusieurs départs pour d'autres profilés, qui consistent en au moins un élément propre à s'engager dans un logement axial prévu selon l'axe d'un premier profilé et comprenant un moyen de liaison avec un second profilé, ce moyen étant constitué soit par une pièce formant coulisseau engagée dans une rainure de maintien de ce second profilé, soit par un élément de même profil que le premier et engagé à son tour dans un logement axial de ce second profilé, les deux éléments étant, le cas échéant, articulés entre eux par une liaison charnière ou analogue.

Dans ces solutions classiques, une fois le ou les éléments engagés dans les logements des profilés, on provoque le serrage de ceux-ci l'un contre l'autre selon deux faces d'appui venant en contact mutuel, en réalisant un déplacement relatif de l'élément vis-à-vis du profilé correspondant dans le sens qui applique celui-ci contre l'autre profilé, maintenu immobile A cet effet, on prévoit sur l'élément, un creux en V par exemple, dont une des faces inclinées coopère avec une vis ou un autre organe du même genre, manoeuvré à travers un trou fileté prévu dans une paroi du profilé qui reçoit l'élément, de telle sorte que la réaction de la vis sur la face du creux détermine un effort transversal sur l'élément dans le sens qui assure l'appui et le serrage de ce profilé contre l'autre. De tels dispositifs sont notamment décrits à travers de nombreuses variantes dans les brevets français FR-A 2 378 971, 2 424 434, 2 504 612, 2 526 888, 2 563 293 au nom de la Société Demanderesse, avec dans chaque cas, des modes de réalisation distincts mais qui procèdent du même principe général tel que rappelé brièvement ci-dessus. Dans le brevet français FR-A-2563293 notamment, la commande de déplacement est réalisée par une vis qui, par réaction avec le fond d'un logement contenant le coulisseau et la coopération d'une face inclinée de ces derniers avec une butée de même pente du logement, réalise un mouvement transversal pour le coulisseau par rapport à l'axe de la vis de commande.

Or, toutes ces solutions sont plus ou moins complexes et surtout mettent en jeu des moyens qui ne permettent souvent qu'imparfaitement d'obtenir un serrage précis des deux profilés.

De même, on connaît par le EP-A-178369, une pièce de jonction mais de structure sensiblement différente, quoique comprenant de façon générale, deux pièces aptes à coulisser longitudinalement l'une par rapport à l'autre, ces pièces solidaires respectivement des deux profilés réalisant ainsi le blocage mutuel de ce dernier. Dans ce cas, la commande de déplacement est assurée par une pièce à excentrique dont la rotation détermine le débattement relatif des deux parties de la pièce de jonction mais là également, le serrage obtenu n'est pas satisfaisant, le déplacement de la pièce mobile n'étant pas guidé dans le profilé correspondant.

La présente invention a pour objet un dispositif de jonction qui apporte vis-à-vis des solutions antérieures des améliorations notables, en assurant en particulier un réglage optimal de l'effort exercé sur les profilés pour les serrer l'un contre l'autre, et un guidage parfait du déplacement de l'élément de serrage mobile dans le profilé correspondant, grâce à un mécanisme très simple, peu coûteux à fabriquer et d'un emploi facile pour tout monteur ou utilisateur, même non spécialisé.

A cet effet, le dispositif considéré, comportant un corps muni à une extrémité d'un organe de liaison avec un premier profilé et dont l'autre extrémité s'engage dans un logement axial d'un second profilé et un coulisseau muni de moyens d'immobilisation vis-à-vis de ce second profilé, le corps pouvant subir un déplacement relatif par rapport au coulisseau parallèlement à la direction de l'axe du logement du second profilé, le coulisseau comportant un évidement cylindrique recevant une pièce munie d'un excentrique, entraînée en rotation autour de l'axe de l'évidement, caractérisé en ce que l'excentrique coopère avec deux pions portés par le corps, de façon telle qu'il exerce un effort sur le corps par l'intermédiaire de l'un ou l'autre des deux pions, selon le sens de rotation de l'excentrique, les pions portés par le corps étant logés dans une rainure axiale du coulisseau et disposés de part et d'autre de la pièce à excentrique, la rainure traversant l'évidement cylindrique.

Dans ces conditions, on comprend que la rotation de la pièce portant l'excentrique dans son évidement cylindrique autour de l'axe de celui-ci, permette, par coopération de l'excentrique avec l'un ou l'autre des pions portés par le corps et selon le sens de la rotation de la pièce, de faire subir au corps un déplacement d'un côté ou de l'autre en suivant la rainure dans laquelle se déplacent les pions qu'il supporte.

Selon une autre caractéristique de l'invention et dans un mode de réalisation préféré du dispositif considéré, le coulisseau présente la forme d'une plaquette, montée dans un lamage du corps et glissant plan sur plan contre le fond de ce lamage, la plaquette comportant un prolongement muni d'un trou, librement traversée par un plot formant cliquet d'immobilisation du coulisseau par rapport à un voile du second profilé délimitant le logement axial de réception du corps, le plot étant soumis à un effort élastique propre à le repousser vers l'extérieur du trou de la plaquette pour l'engager dans un passage en regard, ménagé dans le voile du profilé.

Le plot du coulisseau étant préalablement enfoncé à l'encontre de l'organe élastique, le corps portant le coulisseau peut alors être librement engagé dans le logement axial du profilé qui le reçoit et dont les dimensions sont prévues par construction égales, au jeu de coulissement près, à celles du corps. En fin de course d'engagement, le plot est ainsi amené en regard du passage prévu dans le voile délimitant le logement et est repoussé dans ce passage à travers le trou de la plaquette du coulisseau, en immobilisant alors celui-ci vis-à-vis du profilé. La manoeuvre ultérieure de la pièce à excentrique permet, dans ces conditions, de faire subir au corps un déplacement relatif dans le sens approprié vis-à-vis du coulisseau maintenu immobilisé en réalisant alors du fait de la liaison avec le premier profilé et du déplacement relatif vis-à-vis du second, le serrage mutuel de deux profilés l'un contre l'autre.

Le plot formant cliquet d'immobilisation est de préférence soumis à la poussée d'un bloc de mousse formant l'organe élastique, monté entre le prolongement de la plaquette du coulisseau et un rebord d'appui, parallèle à celui-ci. De préférence également, le rebord présente un talon prévu pour s'engager dans une encoche ménagée dans le corps, afin de guider le déplacement relatif de celui-ci par rapport au coulisseau, glissant librement dans le lamage du corps.

Selon une première variante de réalisation, le corps comporte à son extrémité de liaison avec le premier profilé, un plot ou une coulisse s'engageant dans une glissière de ce profilé et comportant un trou fileté d'axe incliné sur celui du profilé pour recevoir une vis de blocage pour corps par rapport au profilé. Dans d'autres variantes, le corps comporte un élément en forme de charnière de liaison avec un corps analogue, destiné à s'engager dans le logement axial d'un autre profilé, pour former une liaison articulée entre les deux profilés et réaliser entre ceux-ci un angle variable.

De façon générale, et selon une autre caractéristique particulière du dispositif, l'excentrique présente un profil externe en spirale et comporte un bossage cylindrique engagé dans un chambrage correspondant de l'évidement, ce bossage comportant axialement une empreinte en creux de forme géométrique appropriée recevant à travers le voile du profilé l'extrémité d'une clé de commande de sa rotation.

D'autres caractéristiques d'un dispositif pour l'assemblage des deux profilés établi conformément à l'invention, apparaîtront encore à travers la description qui suit de plusieurs exemples de réalisation, donnés à titre indicatif et non limitatif, en référence aux dessins annexés sur lesquels :

– la Figure 1 est une vue en perspective d'un dispositif établi selon un premier mode de réalisation, pour la liaison de deux profilés métalliques présentant des directions perpendiculaires l'une à l'autre ;

– la Figure 2 est une vue en coupe transversale à plus grande échelle du dispositif selon la Figure 1 ;

– les Figures 3, 4 et 5 sont des vues en perspective de diverses variantes de réalisation du dispositif considéré.

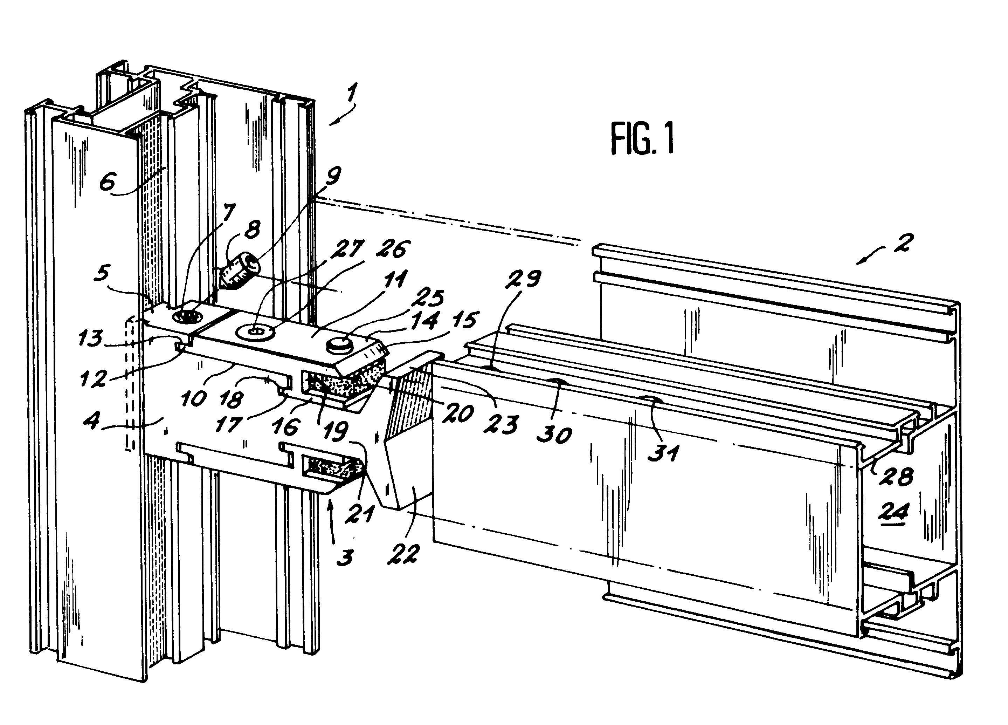

Le dispositif représenté sur la Figure 1 est destiné à réaliser la liaison de deux profilés métalliques, respectivement 1 et 2, ces profilés en tôle d'aluminium notamment, étant obtenus par extrusion et présentant des profils complexes, nécessités par les applications envisagées.

Dans cet exemple, le dispositif de liaison, désigné dans son ensemble sous la référence 3, est prévu pour permettre l'application et le serrage des deux profilés l'un contre l'autre, en formant entre eux une équerre à angle droit.

Le dispositif comporte principalement un corps 4, se prolongeant à une de ses extrémités par une coulisse 5, propre à venir s'engager dans une rainure 6 de même profil, prévue sur un côté du premier profilé 1. Dans le corps 4 est par ailleurs prévu un trou 7, dont l'axe et incliné sur celui du profilé 1, ce trou, fileté intérieurement, étant aménagé pour recevoir une vis 8 muni d'une empreinte centrale 9, permettant sa rotation à l'intérieur du trou 7 par une clé appropriée du genre clé "Allen", afin de permettre en fin de course de bloquer le corps 4 par rapport au profilé 1 par appui de la vis 8 sur le fond de la rainure 6.

Sur l'un de ses côtés, le cas échéant sur ses deux faces opposées, le corps 4 présente un lamage 10, dans lequel est monté un coulisseau 11, comportant un talon 12 engagé dans une encoche 13 du corps, de manière à guider le déplacement relatif du corps par rapport au coulisseau, tout en autorisant le glissement plan sur plan de ce dernier contre le lamage 10.

Le coulisseau 11 en forme générale de plaquette, comporte un prolongement 14 à l'opposé du talon 12, terminé par une partie en biseau 15. Sous ce prolongement, la plaquette comporte un rebord 16, lui-même muni d'un autre talon 17 engagé dans une encoche 18 du corps et permettant, en combinaison avec le premier talon 12 déjà mentionné, un guidage sur du coulisseau.

Entre le prolongement 14 et le rebord 16, est ménagé un espace 19 dans lequel est monté un bloc 20 d'un matériau élastique approprié, du genre mousse de polyuréthane ou autre. Le corps 4 se prolonge par ailleurs à l'opposé de la coulisse 5 par une partie médiane 21 terminée par deux épanouissements symétriques 22 et 23, facilitant l'engagement du corps 4 dans un logement axial 24 prévu dans le second profilé 2. Les dimensions de ce logement sont sensiblement égales, aux jeux de coulissement près, à celles du corps 4 muni du coulisseau 11, de telle sorte que l'ensemble puisse s'engager aisément à l'intérieur du profilé.

Le coulisseau 11 comporte un plot 25, ainsi qu'une pièce à excentrique 26, munie d'une empreinte 27 de commande par le dessus du coulisseau 11 et dont le détail sera explicité plus loin. Enfin, dans un voile 28 du second profilé 2, délimitant un côté du logement 24, sont ménagés des passages, respectivement 29, 30 et 31, permettant d'accéder à la vis 8, à la pièce à excentrique 26 et au plot 25.

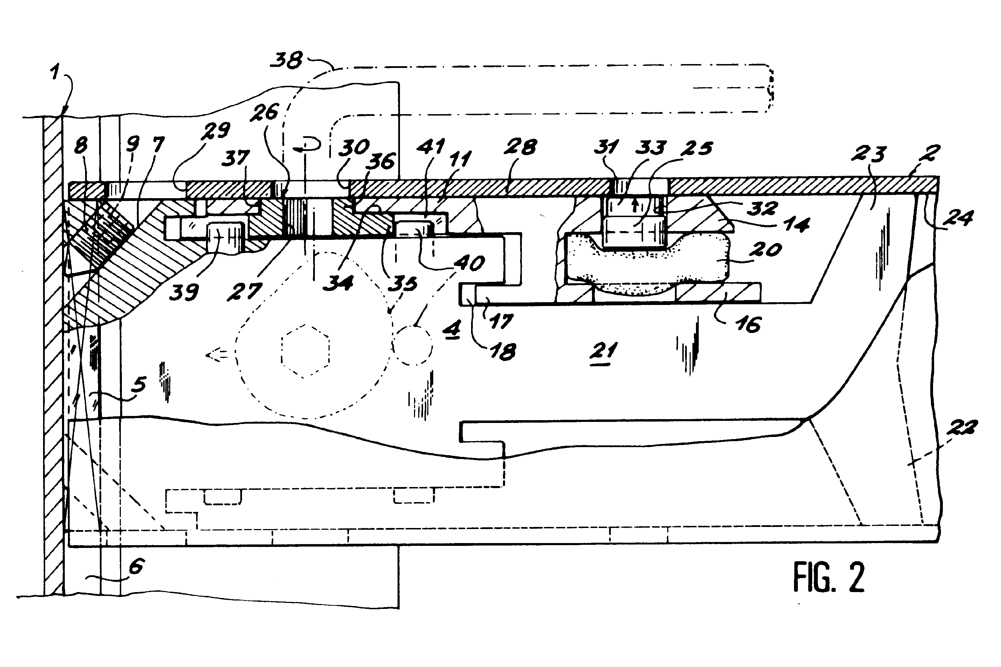

La Figure 2 illustre avec plus de détails, la réalisation pratique de diverses parties du corps 4 du dispositif de liaison selon l'invention, ainsi que du ou des coulisseaux 11, portés par ce corps.

On voit ainsi que le plot 25 est monté libre dans un trou traversant 32, prévu dans le prolongement 14, et s'appuie par sa face inférieure contre le bloc de mousse élastique 20. Les dimensions diamétrales de la partie supérieure 33 de ce plot correpondent à celles du passage 31, prévu dans le voile 28 de façon telle que, lorsque la pièce 4 est engagée à fond dans le logement 24, ce plot 25 engage sa partie supérieure 33 dans le passage 31 à la manière d'un cliquet, en étant repoussé par l'effort élastique dû au coussin de mousse 20.

Le coulisseau 11 comporte par ailleurs un évidement interne 34, recevant la pièce à excentrique 26, cette dernière comportant une première partie 35 dont le profil (schématiquement représenté en traits pointillés avec rabattement sur la Figure 2) a la forme d'une spirale, et une seconde partie 36, disposée au-dessus de la première et engagée dans un chambrage cylindrique 37 de l'évidement 34. La rotation de la pièce 26 est réalisée au moyen d'une clé 38 engagée dans l'empreinte 27 de la pièce 26, à travers le passage 30 du voile 28.

Le corps 4 comporte enfin deux pions, respectivement 39 et 40, situés à l'opposé l'un de l'autre de part et d'autre de la partie en spirale 35 de la pièce 26, ces pions étant engagés dans une rainure allongée 41, ménagée dans le coulisseau 11 et traversant l'évidement 34 recevant la pièce 26.

La rotation de la pièce 26 sous l'effet de la clé 38 permet ainsi, par appui de la surface externe de la partie 35, formant came sur l'un ou l'autre des pions 39 et 40, d'exercer sur le corps 4 un effort de déplacement vers la droite ou vers la gauche sur la Figure, selon le sens de la rotation de la pièce 26. Le coulisseau 11 étant immobilisé vis-à-vis du profilé 2 par le plot 25, il en résulte un effet de rapprochement (ou d'écartement) du profilé 1 vis-à-vis du profilé 2, consécutivement au déplacement relatif du corps 4 lui-même, lié au premier profilé 1 par la coulisse 5 engagée dans la rainure 6.

On réalise ainsi un dispositif de liaison de conception très simple et dans lequel l'action de la pièce à excentrique 26, en coopérant avec les pions fixes 39 et 40 du corps 4, permet le déplacement progressif d'un profilé par rapport à l'autre, avec un réglage précis et sûr de leur serrage mutuel.

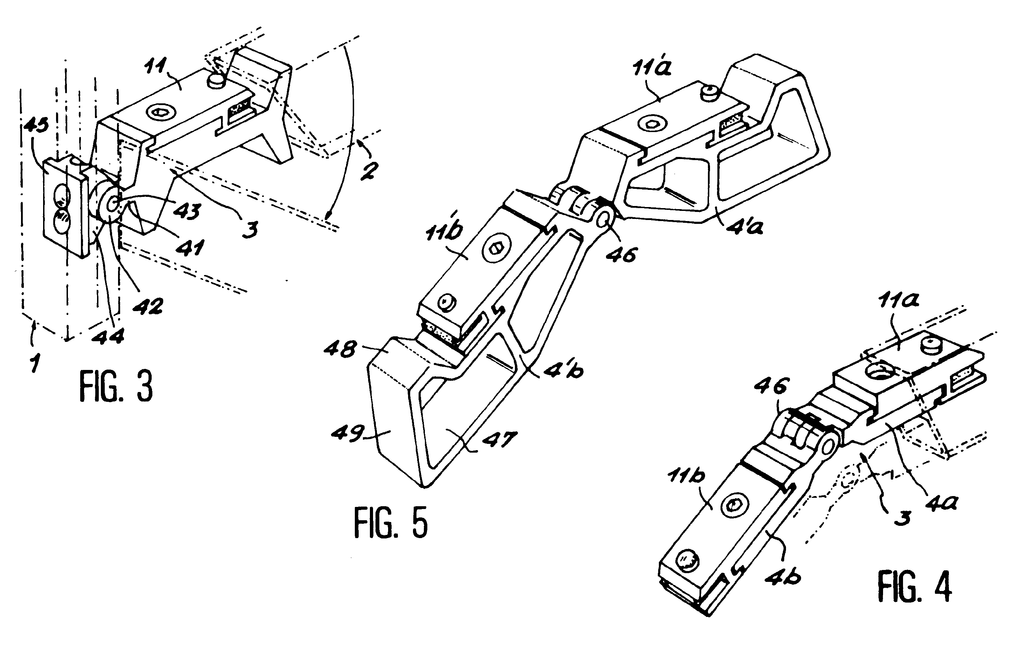

Les Figures 3 à 5 illustrent d'autres variantes de réalisation du dispositif de liaison selon l'invention. Sur la Figure 3, le corps 3 et son coulisseau 11 sont identiques à ceux décrits en relation avec le premier exemple illustré sur les Figures 1 et 2, le système de coulisse prévu à l'extrémité du corps, pour la liaison avec le premier profilé, étant ici remplacé par un ensemble articulé, permettant de faire varier les orientations relatives des profilés 1 et 2, notamment lorsque l'un de ceux-ci présente en bout une coupe biaise, l'assemblage des profilés étant en forme d'onglet

Dans cette variante, le corps 3 comporte une nervure centrale 41, terminée par une partie 42 en forme de gond supportant un axe d'articulation transversal 43. Sur cet axe est articulé une nervure 44 appartenant à une coulisse 45 permettant comme précédemment, de solidariser le dispositif 3 avec le premier profilé 1.

Dans une autre variante illustrée sur la Figure 4, le dispositif de liaison 3 comporte deux parties identiques, constituées chacune d'un corps 4a, 4b et de coulisseaux 11a et 11b, ces deux parties étant réunies l'une à l'autre par une charnière 46.

Enfin, dans une autre variante selon la Figure 5, on retrouve une disposition sensiblement similaire, avec des corps 4'a,4'b, ainsi que des coulisseaux 11'a, 11'b, et une charnière de liaison 46, les corps étant formés de pièces non plus massives mais venues de fonderie et ajourées, comportant des voiles 47, 48 et 49, de profils appropriés autorisant le montage de pièces dans les logements axiaux des profilés à réunir, avant blocage et serrage mutuel de ceux-ci de la façon déjà décrite.

Bien entendu, il va de soi que l'invention ne se limite pas aux seuls exemples de réalisation plus spécialement décrits et représentés ci-dessus ; elle en embrasse au contraire toutes les variantes. En particulier, on conçoit que les empreintes de commande de la vis de blocage 8 et de la pièce à excentrique 26 puissent avoir un profil quelconque, par exemple à six pans, cruciforme, carré, rectangulaire ou autres, ou encore à denture multiple axée sur la partie cylindrique 36. De même, le bloc de mousse élastique pourrait être remplacé par un ressort ou par un autre organe élastique analogue.

## Revendications

1. Pièce de jonction entre deux profilés métalliques formant entre eux un angle donné, comportant un corps (4) muni à une extrémité d'un organe de liaison (5) avec un premier profilé (1) et dont l'autre extrémité (21) s'engage dans un logement axial (24) d'un second profilé (2) et un coulisseau (11) muni de moyens (25) d'immobilisation vis-à-vis de ce second profilé, le corps pouvant subir un déplacement relatif par rapport au coulisseau parallèlement à la direction de l'axe du logement du second profilé, le coulisseau (11) comportant un évidement cylindrique (37) recevant une pièce (26) munie d'un excentrique (35), entraînée en rotation autour de l'axe de l'évidement, caractérisée en ce que l'excentrique coopère avec deux pions (39-40) portés par le corps, de façon telle qu'il exerce un effort sur le corps par l'intermédiaire de l'un ou l'autre des deux pions, selon le sens de rotation de l'excentrique, les pions (39-40) portés par le corps (4) étant logés dans une rainure axiale (41) du coulisseau (11) et disposés de part et d'autre de la pièce (26) à excentrique (35), la rainure traversant l'évidement cylindrique (37).

2. Pièce de jonction selon la revendication 1, caractérisée en ce que le coulisseau (11) présente la forme d'une plaquette, montée dans un lamage (10) du corps (4) et glissant plan sur plan contre le fond de ce lamage, la plaquette comportant un prolongement (14) muni d'un trou (32), librement traversée par un plot (25) formant cliquet d'immobilisation du coulisseau par rapport à un voile (28) du second profilé (2) délimitant le logement axial (24) de réception du corps, le plot étant soumis à un effort élastique propre à le repousser vers l'extérieur du trou de la plaquette pour l'engager dans un passage (31) en regard, ménagé dans le voile.

3. Pièce de jonction selon la revendication 2, caractérisée en ce que le plot (25) formant cliquet d'immobilisation est soumis à la poussée d'un bloc de mousse formant l'organe élastique (20), monté entre le prolongement (14) de la plaquette du coulisseau (11) et un rebord d'appui (16), parallèle à celui-ci.

4. Pièce de jonction selon la revendication 3 , caractérisée en ce que le rebord (16) présente un talon (17) prévu pour s'engager dans une encoche (18) ménagée dans le corps (4), afin de guider le déplacement relatif de celui-ci par rapport au coulisseau (11) glissant librement dans le lamage (10) du corps.

5. Pièce de jonction selon l'une quelconque des revendications 1 à 4, caractérisée en ce que l'excentrique (35) présente un profil externe en spirale et comporte un bossage cylindrique (36) engagé dans un chambrage (37) correspondant de l'évidement (34) ce bossage (36) comportant axialement une empreinte en creux (27) de forme géométrique appropriée, recevant à travers le voile (28) du profilé (2) l'extrémité d'une clé de commande (38) de sa rotation.

6. Pièce de jonction selon l'une quelconque des revendications 1 à 5, caractérisée en ce que le corps (4) comporte à son extrémité de liaison avec le premier profilé (1) un plot ou un coulisseau (5) s'engageant dans une rainure (6) de ce profilé et comportant un trou fileté (7) d'axe incliné sur celui du profilé pour recevoir une vis de blocage (8) du corps (4) par rapport au profilé.

7. Pièce de jonction selon l'une quelconque des revendications 1 à 6, caractérisée en ce que le corps (4) comporte un élément en forme de charnière (46) de liaison avec un corps analogue, destiné à s'engager dans le logement axial d'un autre profilé, pour former une liaison articulée entre les deux profilés et réaliser entre ceux-ci un angle variable.

## Patentansprüche

1. Verbindungsstück zur gegenseitigen Verbindung zweier untereinander einen gegebenen Winkel bildender metallischer Profile, mit einem Körper (4), der an einem Ende mit einem Organ (5) zur Verbindung mit einem ersten Profil (1) versehen ist und dessen anderes Ende (21) in eine axiale Aufnahme (24) eines zweiten Profils (2) eingreift, und mit einem Schieber (11), der mit Mitteln (25) zur Festlegung gegenüber dem zweiten Profil versehen ist, wobei der Körper eine Relativverlagerung gegenüber dem Schieber parallel zur Richtung der Achse der Aufnahme des zweiten Profils durchführen kann und der Schieber (11) eine zylindrische Ausnehmung (37) aufweist, die ein mit einem Exzenter (35) versehenes Stück (26) aufnimmt, das um die Achse der Ausnehmung in Drehung mitgenommen wird, dadurch gekennzeichnet, daß der Exzenter mit zwei von dem Körper getragenen Stücken (39, 40) derart zusammenwirkt, daß er eine Wirkung auf den Körper mit Hilfe des einen oder des anderen der beiden Stücke ausübt, je nach dem Drehsinn des Exzenters, wobei die von dem Körper (4) getragenen Stücke (39, 40) in einer axialen Nut (41) des Schiebers (11) angeordnet und auf beiden Seiten des Stücks (26) mit dem Exzenter (35) angeordnet sind, und die Nut die zylindrische Ausnehmung (37) durchquert.

2. Verbindungsstück nach Anspruch 1, dadurch gekennzeichnet, daß der Schieber (11) die Form einer in einer Senkung (10) des Körpers (4) angeordneten und flächig auf dem Boden dieser Senkung gleitenden Platte aufweist, die eine mit einem Loch (32) versehene Verlängerung (14) enthält, wobei das Loch (32) frei von einem Zapfen (25) durchquert wird, der eine Festlegungsklinke des Schiebers gegenüber einer die axiale Aufnahme (24) zur Aufnahme des Körpers begrenzenden Schale (28) des zweiten Profils (2) bildet und einer elastischen Wirkung unterworfen ist, die ihn in Richtung auf die Außenseite des Lochs der Platte zurückdrückt, um ihn in einen gegenüberliegenden, in der Schale ausgebildeten Durchgang (31) eingreifen zu lassen.

3. Verbindungsstück nach Anspruch 2, dadurch gekennzeichnet, daß der die Festlegungsklinke bildende Zapfen (25) dem Druck eines das elastische Organ (20) bildenden Schaumblocks unterworfen ist, der zwischen der Verlängerung (14) der Platte des Schiebers (11) und einem Abstützrand (16) parallel zu dieser angeordnet ist.

4. Verbindungsstück nach Anspruch 3, dadurch gekennzeichnet, daß der Rand (16) einen Ansatz (17) aufweist, der vorgesehen ist, in eine in dem Körper (4) ausgesparte Kerbe (18) einzugreifen, um die Relativverlagerung des Körpers gegenüber dem frei in der Senkung (10) des Körpers gleitenden Schieber (11) zu führen.

5. Verbindungsstück nach einem der Ansprüche 1 bis 4, dadurch gekennzeichnet, daß der Exzenter (35) ein äußeres spiralförmiges Profil aufweist und einen zylindrischen Vorsprung (36) enthält, der in eine der Ausnehmung (37) entsprechende Einsenkung (34) eingreift, wobei der Vorsprung axial eine Hohlvertiefung (27) geeigneter geometrischer Form aufweist, die durch die Schale (28) des Profils (2) das Ende eines Steuerschlüssels (38) für seine Drehung aufnimmt.

6. Verbindungsstück nach einem der Ansprüche 1 bis 5, dadurch gekennzeichnet, daß der Körper (4) an seinem Verbindungsende mit dem ersten Profil (1) einen Stift oder ein Gleitstück (5) aufweist, das in eine Nut (6) dieses Profils eingreift und ein Gewindeloch (7) mit einer gegenüber der Achse des Profils schräg verlaufenden Achse enthält, zur Aufnahme einer Blockierschraube (8) des Körpers (4) gegenüber dem Profil.

7. Verbindungsstück nach einem der Ansprüche 1 bis 6, dadurch gekennzeichnet, daß der Körper (4) ein Element in Scharnierform (46) zur Verbindung mit einem analogen Körper aufweist, zum Eingriff in die axiale Aufnahme eines anderen Profils bestimmt, um eine Gelenkverbindung zwischen den beiden Profilen zu bilden und zwischen diesen einen veränderbaren Winkel zu realisieren.

**Claims**

1. Part for joining two metal sections forming a given angle between them, comprising a body (4) provided at one end with a member (5) for linking with a first section (1) and the other end (21) of which engages in an axial housing (24) of a second section (2) and a slide (11) provided with means (25) for immobilising with respect to this second section, the body being capable of undergoing a relative displacement with respect to the slide parallel with the direction of the axis of the housing of the second section, the slide (11) comprising a cylindrical cavity (34), receiving a part (26) provided with a cam (35), driven in rotation about the axis of the cavity, characterised in that the cam cooperates with two studs (39-40) borne by the body, so that it exerts a force on the body through the intermediary of one or other of the two studs, depending on the direction of rotation of the cam, the studs (39-40) borne by the body (4) being housed in an axial slot (41) of the slide (11) and arranged on either side of the part (26) with cam (35), the slot passing through the cylindrical cavity (34).

2. Joining part according to Claim 1, characterised in that the slide (11) has the shape of a small plate, mounted in a facing (10) of the body (4) and sliding plane-on-plane against the bottom of this facing, the small plate comprising an extension (14) provided with a hole (32), through which passes freely a plug (25) forming a catch for mobilising the slide with respect to a web (28) of the second section (2) delimiting the axial housing (24) for receiving the body, the plug being subjected to a resilient force adapted to push it back towards the outside of the hole of the small plate so as to engage it in a facing passage (31), made in the web.

3. Joining part according to Claim 2, characterised in that the plug (25) forming a locking catch is subjected to the thrust from a block of foam forming the resilient member (20), mounted between the extension (14) of the small plate of the slide (11) and a support flange (16), parallel with the latter.

4. Joining part according to Claim 3, characterised in that the flange (16) has a heel (17) provided in order to engage in a notch (18) made in the body (4), so as to guide the relative displacement of the latter with respect to the slide (11) sliding freely in the facing (10) of the body.

5. Joining part according to any of Claims 1 to 4, characterised in that the cam (35) has a spiral-shaped outer profile and comprises a cylindrical boss (36) engaged in a corresponding recess (37) of the cavity (34), this boss (36) comprising axially a recessed imprint (27) of appropriate geometrical shape, receiving through the web (28) of the section (2) the end of a key (38) for controlling its rotation.

6. Joining part according to any of Claims 1 to 5, characterised in that the body (4) comprises at its end for linking with the first section (1) a plug or a slide (5) engaging in a slot (6) of this section and comprising a threaded hole (7) of axis inclined relative to that of the section as as to receive a screw (8) for immobilising the body (4) with respect to the section.

7. Joining part according to any of Claims 1 to 6, characterised in that the body (4) comprises an element (46) in the form of a hinge for linking with a similar body, intended to engage in the axial housing of another section, so as to form an articulated link between the two sections and to create a variable angle between them.

FIG.1

EP 0 356 278 B1

FIG. 2

EP 0 356 278 B1

FIG. 3

FIG. 5

FIG. 4

EP 0 356 278 B1